# EUROPEAN PATENT APPLICATION

(11) **EP 1 128 286 A2**
(43) Date of publication of application: **29.08.2001**
(21) Application number: 01301486.5
(22) Date of filing: 20.02.2001
(51) Int. Cl.: G06F 17/30, H04L 29/06

(54) **Active content delivery system**

(30) Priority: 22.02.2000 US 507922
(71) Applicant: Web Marketing Limited, London SW1 (GB)
(72) Inventor: Lewis, Mark Samuel, Battersea, London SW11 (GB); Boden-Cummins, Casper, London NW2 3TG (GB); Denne, Joseph, London W9 2HU (GB); Munro, Robert, London SW4 8DD (GB); van de Merwe, Richard, Putney, London SW15 3AB (GB)
(74) Representative: Geary, Stuart Lloyd

(57) **Abstract**

Active content such as video or audio can be embedded in a region of a web page, such as a banner, at a client (1). A source parameter of the region causes a page containing an analysis script to be requested. This script reports characteristics of the client to a server apparatus (4a, 4b) which responds by supplying a document for activating a media player at the client (1), of a type appropriate to the client (1), to present content specified by the server apparatus. This document is embedded in said region. The server apparatus need not be the same apparatus as that which provided the web page containing said region.

## Description

The present invention relates to a method of delivering active content to a client, the method comprising transmitting a first hypermedia document to a client that has requested said first document, the first document including means for causing a second hypermedia document to be requested and embedded therein, receiving a request for the second hypermedia document from the client, and transmitting the second hypermedia document to the client in response to a request from the client. The present invention also relates to a system for delivering active content to a client, the system comprising hypermedia server equipment configured to transmit a first hypermedia document-to a client that has requested said first document, the first document including means for causing a second hypermedia document to be requested and embedded therein receive a request for the second hypermedia document from the client, and transmit the second hypermedia document to the client in response to a request from the client. Additionally, the present invention relates to a set of signals being propagated sequentially in a network between hypermedia server equipment and a client, said set comprising a first hypermedia document propagating to the client from the hypermedia server equipment, said hypermedia document including means for causing a second hypermedia document to be requested and embedded therein, and the second hypermedia document propagating to said client from the hypermedia server equipment.

The use of banners, images typically 468 pixels by 60 pixels, for advertising on web pages has become a familiar sight to users of the World Wide Web. However, advertisers have found that this familiarity has been accompanied by a reduction in the responsiveness of web users to the advertisements as measured by the "click through" rate. Attempts have therefore been made to make advertisements more impactful.

One approach described, in WO-A-9927454, breaks the link between the web page and the advertisement by introducing a video stream in parallel with the packet containing the web pages requested by a user. The streamed video is them displayed in a window outside the user's web browser's window. This system has the disadvantage that users would prefer not to have advertisements occupying a proportion of their computer's display. Consequently, users must be offered some inducement, e.g. free Internet access, to accept such a system. A further disadvantage is that a special client program must be installed on the user's machine.

Another approach is to include streamed video in banners. An example of such an approach could, at the time of writing, be found at http://www.intervu.com/ service/vbanner.html". A study of this page showed that a layer or an inline frame had its source property set so that a document containing a system analysis script is returned. The system analysis script is determined by the type of the browser, i.e. Microsoft Internet Explorer of Netscape Navigator, from which it is requested and is run to determine only the video format that can be handled by the client before invoking a local media playing applet and requesting the video in the appropriate format.

Thus, this approach is limited to selecting the appropriate video format. In other words, the video supplied to the banner remains the same until the video source file contents are changed.

It is an aim of the present invention to provide an improved and more flexible streamed content delivery system.

A method according to the present invention is characterised by the second hypermedia document including means for causing the client to report information on its configuration in a request for a third hypermedia document, receiving the request for the third hypermedia document, generating the third hypermedia document in dependence on said information such that the third hypermedia document includes means for activating a presentation process at the client to present, to a user, active content from a source specified in the third hypermedia document and transmitting the third hypermedia document to the client.

A system according to the present invention is characterised by the second hypermedia document including means for causing the client to report information on its configuration in a request for a third hypermedia document and the hypermedia server equipment being configured to receive the request for the third hypermedia document, generate the third hypermedia document in dependence on said information such that the third hypermedia document includes means for activating an active content presentation process at the client to present, to a user, active content from a source specified in the third hypermedia document, and transmit the third hypermedia document to the client.

Active content comprises time-varying perceivable matter such as an audio, video or multimedia file or stream having a discrete identity. Such a stream may be from live source, e.g. a microphone or a video camera.

Preferably, the first hypermedia document is transmitted from a first location and the second and third hypermedia documents are transmitted from a second location.

Preferably, said active content is streamed from a location and apparatus different than the location from which the first hypermedia document is transmitted.

Preferably, said active content is streamed from a location different than the location from which the second hypermedia document is transmitted.

Preferably, said configuration information comprises the identity of the operating system of the client, the type of the application (usually a web browser but not inevitably so), which produced said request for the first hypermedia document, running at the client, and the type of an active content presentation process available at the client. More preferably, the third hypermedia document includes means for activating the active content presentation process whose type was contained in said configuration information and a locator for a source of active content in a form adapted for said type of active content presentation process. Still more preferably, said active content comprises streamed video.

Preferably, the second hypermedia document includes an id and means for causing the client to report said id in said request for a third hypermedia document and the third hypermedia document is generated in dependence on said id.

Preferably, the third hypermedia document includes printable matter, is configured such that the printable matter is not displayed at the client and includes codes for defining a user input element and causing the client to print said printable matter in response to an input by means of said user input element.

The means for causing a second hypermedia document to be requested and embedded therein may comprise a reference to a fourth hypermedia document, the fourth hypermedia document being configured to request said second hypermedia document after a predetermined period has elapsed.

A set of signals according to the present invention is characterised by the second hypermedia document including means for causing the client to report information on its configuration in a request for a third hypermedia document, and the third hypermedia document propagating to the client from the hypermedia server equipment, the third hypermedia document including means for activating an active content presentation process at the client to present active content from a source specified in the third hypermedia document.

Preferably, the first hypermedia document comprises packets having a first source address and the second and third hypermedia documents comprise packets having a second source address.

Preferably, the set of signals includes packets containing active content data from a source identified in said third document and propagating to the client. More preferably, said packets of active content data have a source address different than the source address in the packets of the first hypermedia document. Sill more preferably, said packets of active content data have a source address different than the source address in the packets of the second hypermedia document. Yet more preferably, said packets of active content data have a source address different than the source address in the packets of the third hypermedia document.

Preferably, said configuration information comprises the identity of the operating system of said client, the type of application running at the client and which produced said request for the first hypermedia document, and the type of an active content presentation process available at the client. More preferably, the third hypermedia document includes a means for activating the active content presentation process of the type whose identity that was contained in said configuration information and a locator for a source of active content data adapted for said type of active content presentation process. Still more preferably, said active content comprises video.

Preferably, the second hypermedia document includes an id and means for causing the client to report said id in said request for a third hypermedia document and the third hypermedia document is generated in dependence on said id.

Preferably, the third hypermedia includes printable matter, is configured such that the printable matter is not displayed at the client and includes codes for defining a user input element and causing the client to print said printable matter in response to an input by means of said user input element.

The set of signals may include a fourth hypermedia document, propagating to the client from the hypermedia server equipment and configured to request said second hypermedia document after a predetermined period has elapsed, and said means for causing a second hypermedia document to be requested and embedded therein may therefore comprise a reference to the fourth hypermedia document.

According to a fourth aspect of the present invention, there is provided a method of distributing media comprising:-
inserting a predetermined locator as a source definition in a plurality of hypermedia documents at different locations;
providing a first hypermedia document at said location, said hypermedia document including means for causing a destination client to report back information on its configuration in a request for a second hypermedia document;
programming a hypermedia server to generate the second hypermedia document in dependence on configuration information in requests therefor, the second hypermedia document including means for activating an active content presentation process, of a type determined by said information, located at the requesting client to present active content from a source specified in the second hypermedia document.

Preferably, the method of the fourth aspect includes supplying active content data to said source. More preferably, the active content data is video data in a plurality of formats.

Embodiments of the present invention will now be described, by way of example, with reference to the accompanying drawings, in which:
Figure 1 shows a network architecture over which the present invention can be employed;
Figure 2 illustrates a client in the network of Figure 1;
Figure 3 illustrates a web server in the network of Figure 1;
Figure 4 illustrates a web page provided from the web server of Figure 3;
Figure 5 illustrates an advertising server in the network of Figure 1;
Figure 6 illustrates a video server system in the network of Figure 1;
Figure 7 is a flowchart illustrating the operation of the advertising server of Figure 5; and
Figure 8 is a further flowchart illustrating the operation of the advertising server of Figure 5.

In the following description, only those features of conventional computers relevant to an understanding of the present invention will be described in detail. However, it is to be understood that the computers referred to will have the necessary operating and application software and the necessary hardware such as modems, network cards, sound cards etc.

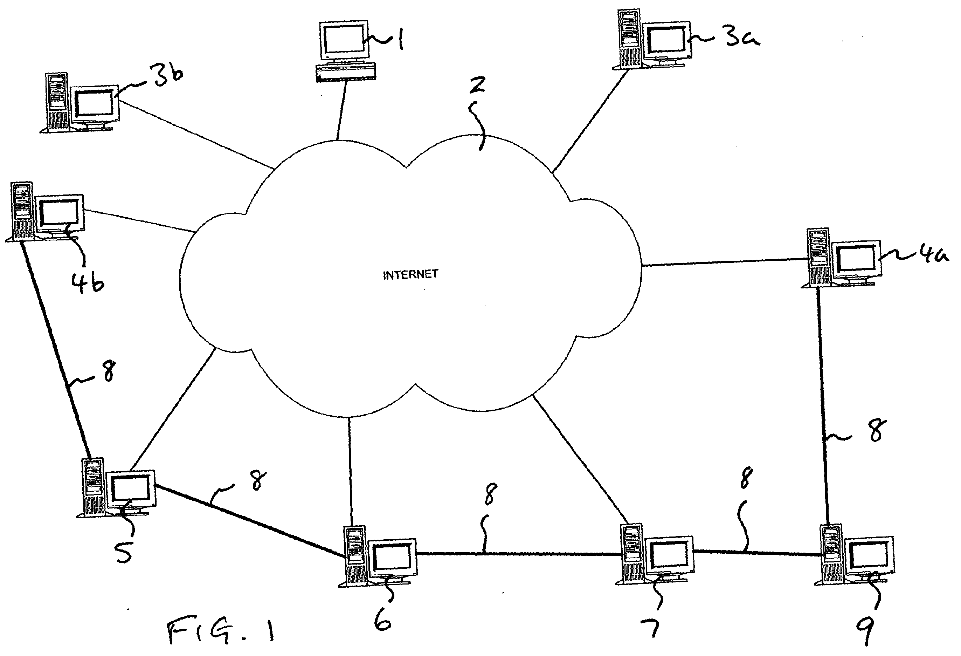

Referring to Figure 1, a client machine 1 is connected to the Internet 2 together with first and second web server machines 3a, 3b, first and second advertisement servers 4a, 4b and first, second and third video server systems 5, 6, 7. The video servers 5, 6, 7 are connected to each other by a high-speed network 8 which is independent of the Internet 2. The advertisement servers 4a, 4b are also connected to a control centre 9 by the high-speed network 8.

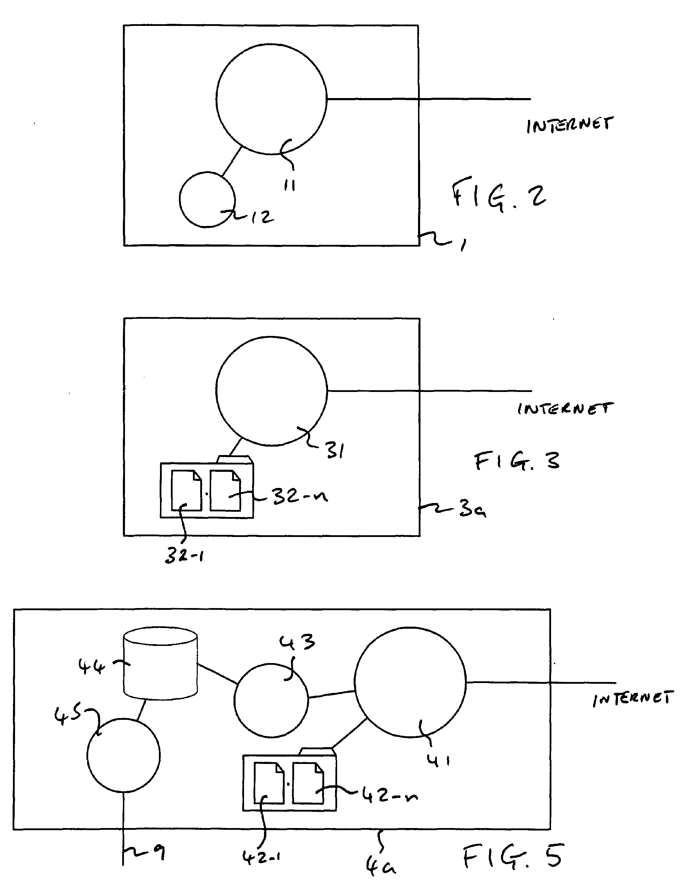

Referring to Figure 2, the client machine 1 is a conventional personal computer on which a web browser application 11 and a media player "plug-in" 12 are provided. The media player plug-in 12 is only run as needed. It will be appreciated that the client machine 1 is provided with various system programs and processes providing the environment for the web browser application 11 and network communication.

Referring to Figure 3, the first web server machine 3a is a conventional computer on which a web server process 31, e.g. Apache or Microsoft IIS, is running. It will be appreciated that the first web server machine 3 will be running an operating system such as Unix, Linux, FreeBSD, Solaris or Windows NT and network communication software.

The web server process 31 can selectively dispatch a plurality of HTML documents 32-1, ..., 32-n to the client machine 1, or any other client, in response to a request therefrom.

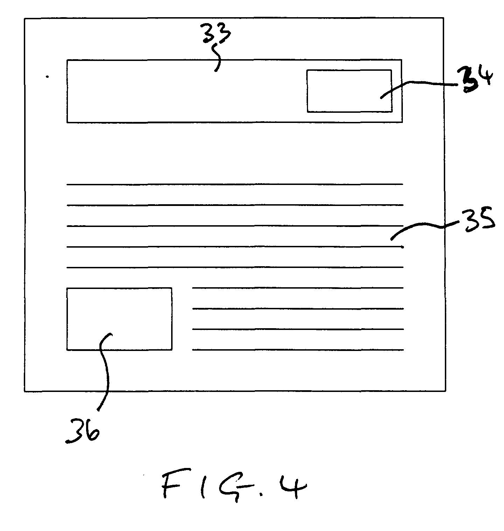

A first HTML document 32-1 comprises HTML tags, text and JavaScript code for producing a page which will be displayed by a browser as shown in Figure 4.

The second web server machine 3b is similarly constructed.

Referring to Figure 4, the page comprises a banner 33, including a video image region, text 35 and a still image 36. The page is conventional save for the manner of the inclusion of the video image 34 which will be described in detail below.

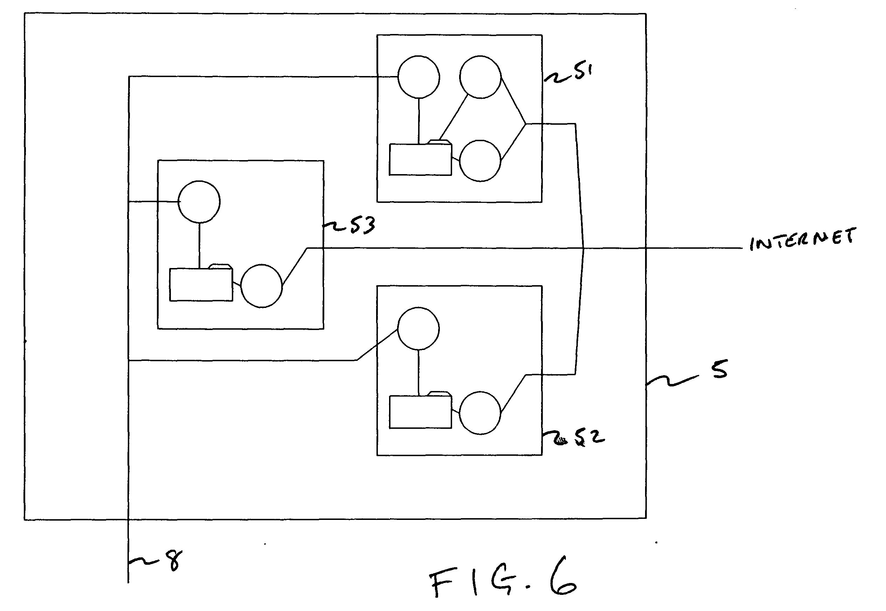

Referring to Figure 5, the first advertisement server 4a is a conventional computer on which a web server process 41, e.g. Apache or Microsoft IIS, is running. It will be appreciated that the first advertisement server 4a will be running an operating system such as Unix, Linux, FreeBSD, Solaris or Windows NT and network communication software.

The web server process 41 can selectively dispatch a plurality of preformed HTML documents 42-1, ..., 42-n to the client machine 1, or any other client, in response to a request therefrom. Additionally, a CGI (Common Gateway Interface) process 43 can be run to produce further HTML documents. The CGI process 43 has access to data in a database 44 which can also be accessed across the high-speed network via a telnet server process 45.

Referring to Figure 6, the first video server system 5 comprises first, second and third video server machines 51, 52, 53. The video server machines 51, 52, 53 comprise conventional computers running respectively FreeBSD, Windows NT and Mac OS X operating systems.

The first video server 51 runs first and second server processes 54, 55 for respectively Real and QuickTime video streaming. The video to be streamed is obtained from an archive 56 in the first video server machine 51. The first video server machine 51 also runs an ftp server process 57 for the uploading of files to the archive 56.

The second video server machine 52 is similarly constructed with an archive 58 and an ftp server 59. However, it has only one video streaming server process 64 which is a Windows Media System video streaming server. The third video server machine 53 also has an archive 62 and an ftp server process 63 and a single video streaming server 64 which, in this case, is a QuickTime video streaming server.

The second and third video server system 6, 7 are similarly constructed.

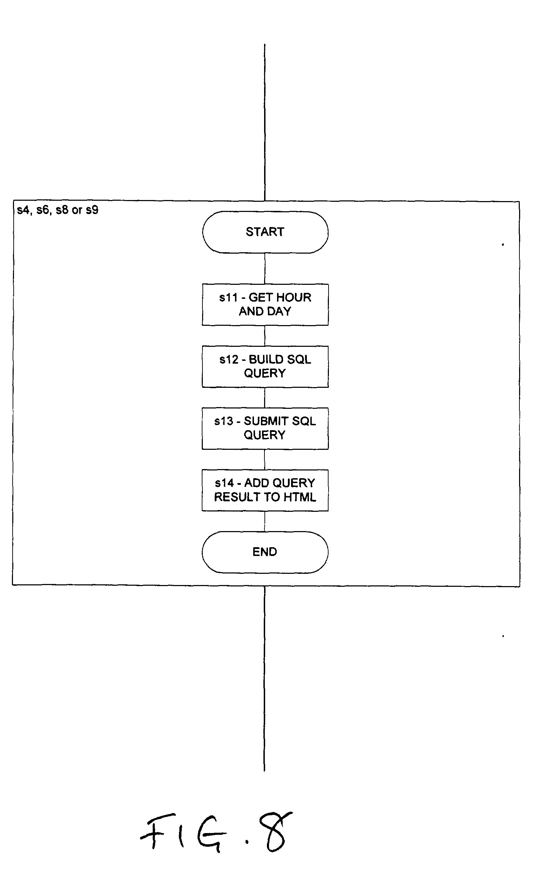

The process of displaying the web page shown in Figure 4 at the client machine 1 will now be described with reference to Figures 1 to 8.

The process starts with the web browser application 11 requesting the first HTML document 32-1 from the first web server machine 3a by sending the document's URL in the usual manner. The request is routed to the first web server machine 3a where it is processed by the web server process 31. The web server process 31 responds by dispatching the requested page 31-1.

Although the content of the first HTML document 32-1 is largely conventional, the implementation of the banner 33 will be explained. The banner 33 is implemented in the first HTML document 32-1 using the following HTML:-

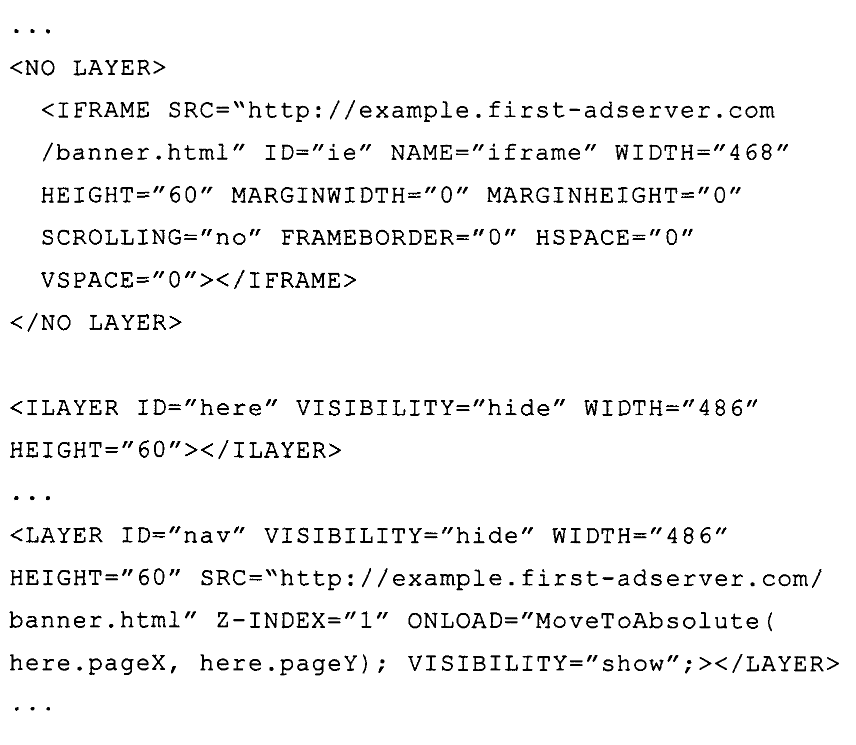

The code between the <NO LAYER> tags is provided for Internet Explorer browsers and the code between the <ILAYER> and <LAYER> tags is for Netscape Navigator browsers.

The Internet Explorer code merely creates a frame and causes the client's web browser to request the document specified in the SRC field to fill the frame. In this case, this document is located at the first advertisement server 4a.

The Navigator code establishes an inline layer and an ordinary layer. The "MoveToAbsolute" method moves the ordinary layer so that it is coextensive with the inline layer. In the present example, the source of the contents of the ordinary layer is the same as for the frame. However, this need not be the case and different URLs may be used in the SRC fields of the frame and the layer so that different documents will be requested by Internet Explorer and Navigator browsers.

The URL in the SRC fields points to the web server process 41 of the first advertisement server 4a. Consequently, after downloading the document from the web server machine 2, the browser application 11 requests the document specified by the URL in the SRC field of the frame and the layer from the web server process 41 of the first advertising server 4a.

The requested document is then dispatched by the web server 41 of the first advertisement server 4a and loaded into the frame or layer as appropriate by the web browser application 11 at the client 1.

The requested document does not contain any displayable elements but does contain scripts which determine the following: -
1. the operating system of the client machine 1;
2. the type of web browser application 11 running on the client machine 1; and
3. the video player plug-ins or helper applications, if any, available on the client machine 1.

In the case of Internet Explorer, the script submits this information and a constant advertisement id, defined in the script, in an action URL to the first advertisement server 4a.

In the case of Navigator, the script creates a new layer coextensive with the inline layer and sets the SRC field of the new layer to the action URL, including the determined environment details.

When the action URL is received by the web server process 41 of the first advertisement server 4a, it is recognised as a reference to the CGI process 43. Consequently, the CGI process 43 is run.

The CGI process 43 determines the video format appropriate for the client machine 1 and the video clip to be played, if such is possible. The operation of the CGI process 43 will now be described.

Referring to Figure 6, when started, the CGI process 43 first prints a standard http header and the constant initial part of the document (step sl). Printing in the context of a CGI process causes the web server to dispatch the "printed" elements to the requesting client. Then, the CGI process 43 determines, from the parameters, in the submitted action URL, which video player plug-ins and helper applications are available at the client (step s2) and selects one from those available, if any, according to a predetermined order of preference. A separate order of preference may be used for each client operating system or groups of operating systems. For example, if the operating system is Window95 or Windows98 and the browser is Netscape Navigator, the order of preference is Real - QuickTime - Windows Media Player whereas if the operating system is a Mac OS, the order would be QuickTime - Real - Windows Media Player.

If a Real player plug-in is available and selected and the browser is Internet Explorer or Navigator (step s3), the CGI process 43 prints HTML code for invoking the client's Real video player plug-in (step s4). Else if a Windows Media Player plug-in is available and selected and the browser is Internet Explorer or Navigator (step s5), the CGI process 43 prints HTML code for invoking the client's Windows Media Player plug-in (step s6). Else if a QuickTime plug-in is available and selected and the browser is Navigator (step s7), the CGI process 43 prints HTML code for invoking the client's QuickTime plug-in (step s8). Otherwise, the CGI process 43 prints HTML code displaying animated GIF image (step s9).

Finally, the CGI process 43 prints the constant final elements of the document (step s10).

The video player plug-in invoking HTML code, printed at steps s4 and s6, will differ depending on whether the client's browser application 11 is Internet Explorer or Navigator. In particular, the Netscape <EMBED> tag is used for Navigator whereas the <OBJECT>tag is used for Internet Explorer.

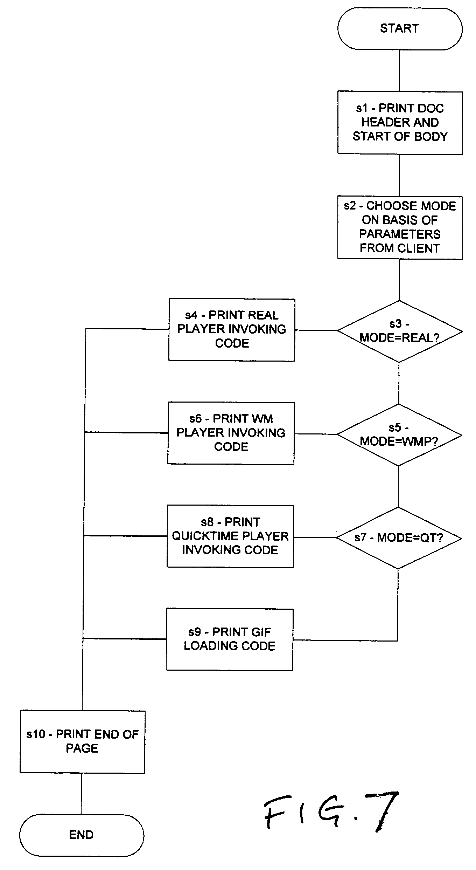

In steps s4, s6, s8 and s9, the source URL for the video or animated GIF is generated dynamically. In the present embodiment, a table in the database 44, mapping a set of parameters onto URLs, is used. In the present example, the columns of the database table comprise: url, media_player_type, hour, week_day, advertisement_id. Consequently, referring to Figure 7, in each of steps s4, s6, s8 and s9, the CGI process 43 determines the present hour (1 - 24) and week day (1 - 7) (step s11) and then builds (step s12) an SQL query of the form: -
"SELECT ur1 FROM table WHERE media_player="[media player plug-in name]" AND hour=[present hour] AND week_day=[present_day] AND advertisement_id= [advertisement id from action URL from client]"

It will of course be appreciated that the above query is merely an example and that other functions, including AND, OR, NOT, LIKE etc. operators, of the information from the client and other factors.

The query is submitted (step s13) to the database 44 to obtain the URL of the correct format version of video to be played or the animated GIF to be displayed if no suitable player applet is available at the client machine 1. The returned URL is then inserted (step s14) into the HTML code for invoking the video player (steps s4, s6, s8) or requesting the default animated GIF (step s9).

When the client's browser application 11 receives the output from the CGI process 43, it requests the video or GIF from the specified URL. In the case of a request for video, this will be sent to the appropriate video server machine 51, 52, 53 in one of the video server systems 5, 6, 7.

Generally, the CGI process 43 of the first advertising server 3a will generate URLs directed to the most local video server system, i.e. the third video server system 7. However, if the most local video server system is not available because of a fault or maintenance, a simple SQL statement can be used to update its database with URLs pointing to another of the video server systems 5, 6, 7.

Referring again to Figure 1, the control centre 9 co-ordinates the databases 44 at the advertising servers 4a, 4b and the video available at the video server systems 5, 6, 7.

The operator of the control centre 9 will have an agreement with the owners of web pages at the web server machines 3a, 3b whereby the page owners include banners pointing to one or both of the advertising servers 4a, 4b.

An advertiser wanting to advertise by way of a video clips in web page banners 33, will provide a video clip to the operator of the control centre 9. The operator of the control centre 9, or another person, converts the video clip into the necessary formats, i.e. Real, Windows Media Player and QuickTime. The advertiser will also contract with the operator of the control centre 9 for a certain level of advertising. The operator of the control centre 9 then generates SQL statements for updating the database 44 at one or each of the advertising servers 4a, 4b in accordance with the contracted service level. The control centre 9 then establishes telnet connections to the relevant advertisement servers 4s, 4b and updates their databases 44. At substantially the same time, the control centre 9 sends the video clips to the required video server machines 51, 52, 43 in the video server systems 5, 6, 7 using ftp over the high-speed network 8.

If the advertising campaign is global, the video clips will be sent to all of the video server systems 5, 6, 7. However, for more localised campaigns, the video clips are only sent to the video server system or systems 5, 6, 7 serving the area in which the campaign is to be run.

An advertiser may wish to change the video clip in its advertisements from time to time. To effect this, the control centre 9 maintains models, of the configurations of the video server machines 51, 52, 53 in the video server systems 5, 6, 7, to which changes in the available video clips are initially made. Then the control centre 9 periodically updates the video server systems 5, 6, 7 to reflect changes to its models.

A second embodiment of the present invention will now be described.

Physically the second embodiment is as described with reference to Figure 1 to 3, 5 and 6. However, it differs in the response of the advertising server 4 to the receipt of an action URL from a client 1.

In addition to the HTML code invoking the necessary media player, the CGI program "prints" text in such a way that it is not visible in the displayed page. For instance, it may be below the extent of the frame, in the case of Internet Explorer, in which the video clip is displayed. Additionally, the CGI program prints script code for displaying a button and a routine for printing the hidden text using a printer attached to the client machine 1 in response to a user clicking on the button. In this way supplementary information may be provided to a user of client in an intriguing manner. The supplementary information may comprise performance and price data for a car being advertised by the video date.

It will be appreciated that, since the supplementary text is "printed" by a CGI program, there is much scope for tailoring the supplementary text in response to other information or events.

A third embodiment of the present invention will now be described.

Physically the second embodiment is as described with reference to Figure 1 to 3, 5 and 6. However, the first HTML page 32-1 does not directly refer to the banner document (example.first-adserver.com/banner.html). Instead, it refers to an additional document. The additional document automatically sends a request for the banner document after a short time has elapsed. This request is handled by a CGI program which check the "referrer" environment variable associated with the request. If the referrer is the additional document, the banner document is dispatched otherwise an "error 404 - file not found" error document is spoofed.

Furthermore, CGI process 43, which handles the action URL submitted by the script in the banner document, check whether the referrer is the banner page before performing the processing described above in the first embodiment. If the referrer is not the banner page, an "error 404 - file not found" error document is spoofed.

Thus, the banner document and the document invoking the video player plug-in cannot be obtained unless requested in the correct sequence after the additional document. Consequently, it is more difficult for the active content to be viewed other than in the intended context.

It will be appreciated that many modifications and alterations may be made to the embodiments described herein without departing from the spirit or scope of the appended claims. For instance, the functions of the video server machines 51, 52, 52, the web server machine 3a, 3b and the advertising servers 4a, 4b may be divided between different computers in different manners. All of these functions could be performed by one computer to provide a small service. Also, the web server machines 3a, 3b and the advertising machines 4a, 4b could each comprise a plurality of machines working in parallel.

The high-speed network 8 is desirable. However, the video clips could and database updating could be performed across the Internet or indeed over telephone circuits.

Streamed active content is preferable. However, the present invention can be employed for the delivery of active content in the form of files that must be completely received by the client before their contents can be presented.

In the foregoing embodiments, plug-ins located at the client 1 are used to present the active content. Alternatively, however, a media player applet, of a type chosen on the basis of the reported characteristics of the client could be provided as an alternative to invoking a plug-in or helper application already available at the client 1.

## Claims

1. A method of delivering active content to a client, the method comprising:-
transmitting a first hypermedia document to a client (1) that has requested said first document, the first document including means for causing a second hypermedia document to be requested and embedded therein;
receiving a request for the second hypermedia document from the client (1); and
transmitting the second hypermedia document to the client (1) in response to a request from the client (1),
**characterised by**
the second hypermedia document including means for causing the client (1) to report information on its configuration in a request for a third hypermedia document;
receiving the request for the third hypermedia document;
generating the third hypermedia document in dependence on said information such that the third hypermedia document includes means for activating a presentation process at the client to present, to a user, active content from a source specified in the third hypermedia document; and
transmitting the third hypermedia document to the client (1).

2. A method according to claim 1, wherein the first hypermedia document is transmitted from a first location and the second and third hypermedia documents are transmitted from a second location.

3. A method according to claim 1 or 2, wherein said active content is streamable.

4. A method according to claim 3, wherein said active content is streamed from a location different to the location from which the first hypermedia document is transmitted and/or different to the location from which the second hypermedia document is transmitted.

5. A method according to any preceding claim, wherein said configuration information comprises the identity of the operating system of the client.

6. A method according to any preceding claim, wherein said configuration information comprises the type of the application (11), which produced said request for the first hypermedia document, running at the client.

7. A method according to any preceding claim, wherein said configuration information comprises the type of an active content presentation process (12) available at the client.

8. A method according to claim 9, wherein the third hypermedia document includes means for activating the active content presentation process (12) whose type was contained in said configuration information and a locator for a source of active content in a form adapted for said type of said active content presentation process (12).

9. A method according to claim 10, wherein said active content comprises streamed video.

10. A method according to any preceding claim, wherein the second hypermedia document includes an id and means for causing the client to report said id in said request for a third hypermedia document and the third hypermedia document is generated in dependence on said id.

11. A method according to any preceding claim, wherein the third hypermedia document includes printable matter, is configured such that the printable matter is not displayed at the client and includes codes for defining a user input element and causing the client to print said printable matter in response to an input by means of said user input element.

12. A method according to any preceding claim, wherein said means for causing a second hypermedia document to be requested and embedded therein comprises a reference to a fourth hypermedia document, the fourth hypermedia document being configured to request said second hypermedia document after a predetermined period has elapsed.

13. A system for delivering active content to a client, the system comprising hypermedia server equipment (3a, 3b, 4a, 4b, 5, 6, 7) configured to:-
transmit a first hypermedia document to a client (1) that has requested said first document, the first document including means for causing a second hypermedia document to be requested and embedded therein;
receive a request for the second hypermedia document from the client (1); and
transmit the second hypermedia document to the client (1) in response to a request from the client (1),
**characterised by** the second hypermedia document including means for causing the client (1) to report information on its configuration in a request for a third hypermedia document and the hypermedia server equipment (3a, 3b, 4a, 4b, 5, 6, 7) being configured to:-
receive the request for the third hypermedia document;
generate the third hypermedia document in dependence on said information such that the third hypermedia document includes means for activating an active content presentation process at the client (1) to present, to a user, active content from a source specified in the third hypermedia document; and
transmit the third hypermedia document to the client (1).

14. A set of signals being propagated sequentially in a network between hypermedia server equipment (3a, 3b, 4a, 4b, 5, 6, 7) and a client (1), said set comprising:-
a first hypermedia document propagating to the client from the hypermedia server equipment, said hypermedia document including means for causing a second hypermedia document to be requested and embedded therein; and
the second hypermedia document propagating to said client from the hypermedia server equipment,
**characterised by**
the second hypermedia document including means for causing the client to report information on its configuration in a request for a third hypermedia document; and
the third hypermedia document propagating to the client from the hypermedia server equipment, the third hypermedia document including means for activating an active content presentation process at the client to present active content from a source specified in the third hypermedia document.

15. A method of distributing media comprising:-
inserting a predetermined locator as a source definition in a plurality of hypermedia documents at different locations;
providing a first hypermedia document at said location, said hypermedia document including means for causing a destination client to report back information on its configuration in a request for a second hypermedia document;
programming a hypermedia server to generate the second hypermedia document in dependence on configuration information in requests therefor, the second hypermedia document including means for activating an active content presentation process, of a type determined by said information, located at the requesting client to present active content from a source specified in the second hypermedia document.
